# EUROPÄISCHE PATENTSCHRIFT

(11) **EP 0 418 673 B1**
(45) Veröffentlichungstag und Bekanntmachung des Hinweises auf die Patenterteilung: **01.03.1995**
(21) Anmeldenummer: 90117295.7
(22) Anmeldetag: 07.09.1990
(51) Int. Cl.: H04N 3/223

(54) **Horizontalablenkstufe**
Horizontal deflection circuit
Circuit de déflection horizontale

(30) Priorität: 20.09.1989 DE 3931404
(43) Veröffentlichungstag der Anmeldung: 27.03.1991
(73) Patentinhaber: SIEMENS AKTIENGESELLSCHAFT, 80333 München (DE)
(72) Erfinder: Ehrmann, Bernd, D-7500 Karlsruhe 41 (DE)

(56) Entgegenhaltungen:
- US-A- 4 318 036
- PATENT ABSTRACTS OF JAPAN vol. 8, no. 39 (E-228)(1476) 21. Februar 1984 & JP-A-58 196 768
- PATENT ABSTRACTS OF JAPAN vol. 7, no. 258 (E-211)(1403) 17. November 1983 & JP-A-58 142 677

## Beschreibung

Die Erfindung betrifft eine Horizontalablenkstufe gemäß dem Oberbegriff des Anspruchs.

Aus der Druckschrift O.Limann et al "Fernsehtechnik ohne Ballast", 15. Auflage, München, 1988, ist bekannt, daß zur Horizontalablenkung eines Elektronenstrahls in einer Bildröhre Ablenkspulen benötigt werden, in deren Wicklungen ein sägezahnförmiger, zwischen einem negativen und positiven Maximalwert verlaufender Strom fließt. Dieser Strom erzeugt in den Spulen ein Magnetfeld, was bewirkt, daß der Elektronenstrahl sich waagrecht über den Leuchtschirm der Bildröhre bewegt. Der Strom steigt von einem negativen Maximalwert bis zu einem positiven Maximalwert an, wodurch der Elektronenstrahl vom linken Rand des Leuchtschirms bis zum rechten Rand des Leuchtschirms wandert. Anschließend läuft der Ablenkstrom schnell zum negativen Maximalwert zurück, und der Elektronenstrahl springt vom rechten Rand des Leuchtschirms zum linken Rand des Leuchtschirms.

Aus der Druckschrift ist weiterhin eine Horizontalablenkstufe bekannt, in der ein sägezahnförmiger Ablenkstrom dadurch erzeugt wird, daß eine Spule über einen elektronisch gesteuerten Schalter an eine konstante Gleichspannung angeschlossen ist. Bei geschlossenem Schalter steigt der Ablenkstrom bis zu einem positiven Maximalwert langsam an. Wird der Schalter geöffnet, so fällt der Strom schnell bis zu einem negativen Maximalwert ab. Wird die Amplitude dieses Ablenkstromes verändert, so bewirkt dies eine Veränderung der Bildbreite, und es ist somit möglich, das Bildraster an die Bildschirmgröße anzupassen. Die Amplitude des Ablenkstroms und damit die Bildbreite wird dadurch beeinflußt, daß die Kapazität eines Rücklaufkondensators durch Hinzuschalten von weiteren Kondensatoren verändert wird. Eine Bildbreitenstabilisierung wird durch einen Regelkreis bewirkt, der als Stellglied die Arbeitswicklung eines Transduktors vorsieht. Der Speisestrom einer Ladedrossel wird so nachgeregelt, daß die Ausgangsspannungen des Ablenkteils konstant bleiben.

Der Erfindung liegt die Aufgabe zugrunde, eine Horizontalablenkstufe der eingangs genannten Art zu schaffen, die eine Bildbreitenregelung erleichtert.

Erfindungsgemäß wird diese Aufgabe durch die im Anspruch 1 angegebenen Maßnahmen gelöst.

Die Größe der Amplitude des Ablenkstromes kann einfach durch die Impulsbreite eines Pulsbreitensignals verändert werden, was bedeutet, daß eine Anpassung des jeweiligen gewünschten Bildrasters an die Bildschirmgröße erreicht wird. Aufwendige schaltungstechnische Maßnahmen zur Bildbreitenregelung werden vermieden. Das horizontalfrequente Pulsbreitensignal bewirkt auch bei einer Änderung der Horizontalfrequenz eine stabile Bildbreite. Ein Pulsbreitenregler, der die Pulsbreite des Pulsbreitensignals durch Vergleich einer dem Ablenkstrom proportionalen Regelgröße mit einer der Bildbreite proportionalen Führungsgröße ermittelt, beaufschlagt eine Ladedrossel mit dem Pulsbreitensignal. Störgrößen, die das Pulsbreitensignal verfälschen können, werden weitgehend ausgeschaltet, und der Ablenkstrom und die Bildbreite bleiben konstant.

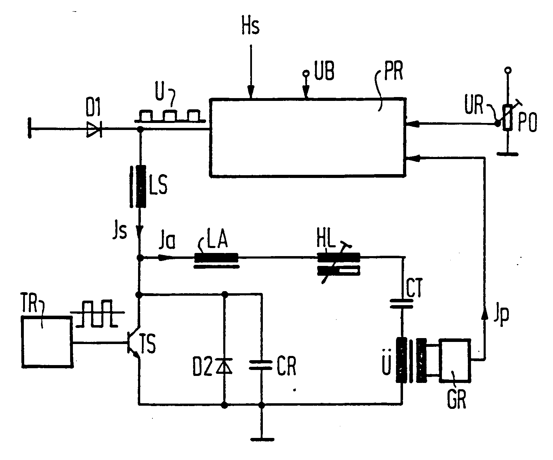

Anhand der Zeichnung, in der ein Ausführungsbeispiel veranschaulicht ist, werden die Erfindung, deren Ausgestaltungen sowie Vorteile näher erläutert.

Die Figur zeigt ein Prinzipschaltbild einer Horizontalablenkstufe.

Die Horizontalablenkstufe nach der Figur enthält einen an sich bekannten Pulsbreitenregler PR, dem ein horizontalfrequentes Signal Hs, eine Betriebsspannung UB und eine der Bildbreite proportionale Referenzspannung UR zugeführt sind. Die Größe der Referenzspannung UR ist mit einem Potentiometer PO entsprechend der gewünschten Bildbreite eingestellt. Der Pulsbreitenregler PR erzeugt aus diesen Größen eine horizontalfrequente, mit einem Gleichspannungsanteil versehene, gepulste Spannung U mit einer der gewünschten Bildbreite entsprechenden Pulsbreite und führt diese Spannung einer Ladedrossel LS zu. Die Ladedrossel LS sowie ein Schalttransistor TS, eine Freilaufdiode D1, Ablenkspulen LA, eine Linearitätsspule HL, ein Tangenskondensator CT, eine Rücklaufdiode D2 und ein Rücklaufkondensator CR bilden weitere Bestandteile der Horizontalablenkstufe. Die Funktionen dieser Bauteile in einer Horizontalablenkstufe zur Erzeugung eines sägezahnförmigen Ablenkstroms sind an sich bekannt und werden deshalb nur kurz erläutert. Es wird angenommen, daß der Schalttransistor TS, der von einer Treiberstufe TR mit einem horizontalfrequenten periodischen Rechtecksignal gesteuert wird, wegen eines gerade anliegenden positiven Rechteckimpulses durchgeschaltet ist. Ein durch die Ablenkspulen LA fließender Ablenkstrom Ia steigt bis zu einem maximalen Wert an und fließt mit einem durch die Ladedrossel LS fließenden Strom Is über den Transistor TS nach Masse ab. Wechselt das Rechtecksignal seine Polarität, d. h., liegt ein negativer Rechteckimpuls an, so sperrt der Transistor TS. Dies bewirkt, daß der Ablenkstrom Ia und der Strom Is den Rücklaufkondensator CR aufladen. Die Freilaufdiode D1 verhindert, daß die beim Sperren des Transistors TS auftretende, durch die Ladedrossel LS verursachte hohe Induktionsspannung den Transistor TS zerstört. Während der Aufladezeit des Rücklaufkondensators CR sinkt der Ablenkstrom Ia bis auf den Wert Null ab. Die Spannung an den Ablenkspulen LA erreicht bei einem Ablenkstrom Ia mit dem Wert Null ein Maximum. Anschließend entlädt sich der Rücklaufkondensator CR über die Ablenkspulen LA der Linearitätsspule HL, den Tangenskondensator CT und über einen Übertrager Ü, d. h., der Ablenkstrom Ia kehrt seine Flußrichtung um und fällt bis zu einem negativen Maximalwert ab. Ist der Rücklaufkondensator CR entladen, schaltet die Rücklaufdiode D2 durch, und der Ablenkstrom Ia steigt wieder bis zu einem Wert Null an. Wechselt das am Transistor TS anliegende Rechtecksignal wieder seine Polarität, so bewirkt dies, daß der Transistor TS durchschaltet und der Ablenkstrom Ia bis zu einem maximalen Wert ansteigt. Der Tangenskondensator CT und die Linearitätsspule HL sind Korrekturglieder und dienen, wie bekannt, zu einer S-förmigen Verzerrung des Ablenkstromes Ia.

Um die Bildbreite konstant zu halten, wird durch den Übertrager Ü der Ablenkstrom Ia zu einem Gleichrichter GR übertragen, der einen dem Ablenkstrom Ia proportionalen Strom Ip als Regelgröße dem Pulsbreitenregler PR zuführt. Der Pulsbreitenregler PR regelt aufgrund der ihm als Führungsgröße zugeführten, der Bildbreite porportionalen Referenzspannung UR und des dem Ablenkstrom Ia proportionalen Stromes Ip die Pulsbreite und somit den Gleichspannungsanteil der gepulsten Spannung U nach.

## Patentansprüche

1. Horizontalablenkstufe, die mit einer Bildbreitenregelung versehen ist und eine Ladedrossel (LS) aufweist, **dadurch gekennzeichnet**, daß die Ladedrossel (LS) mit einem horizontalfrequenten Pulsbreitensignal (U) beaufschlagt wird, dessen Pulsbreite ein Pulsbreitenregler (PR) durch Vergleich einer dem Horizontalablenkstrom (Ia) proportionalen Regelgröße (Ip) mit einer der Bildbreite proportionalen Führungsgröße (UR) ermittelt.

## Claims

1. Horizontal deflection stage which is provided with an image-width control and has a loading reactor (LS), characterized in that the loading reactor (LS) is loaded with a horizontal-frequency pulse-width signal (U), the pulse width of which is determined by a pulse-width control (PR) through comparison of a controlled variable (Ip) proportional to the horizontal deflection current (Ia) with a reference variable (UR) proportional to the image width.

## Revendications

1. Étage de déviation horizontale, qui est muni d'une régulation de la largeur de l'image et comporte une bobine de charge (LS), caractérisé par le fait que la bobine de charge (LS) est chargée par un signal (U) de largeur d'impulsions à fréquence horizontale, dont la largeur des impulsions est déterminée par un régulateur (PR) de la largeur des impulsions, par comparaison d'une grandeur de réglage (Ip) proportionnelle au courant de déviation horizontale (Ia), à une grandeur de référence (UR) proportionnelle à la largeur de l'image.
